# FASCICULE DE BREVET EUROPEEN

(11) **EP 4 005 994 B1**
(45) Date de publication et mention de la délivrance du brevet: **03.01.2024**
(21) Numéro de dépôt: 21209403.1
(22) Date de dépôt: 19.11.2021
(51) Int. Cl.: C04B 12/00, C04B 28/00

(54) **PROCÉDÉ DE FABRICATION DE CIMENT À PARTIR D'UNE MATIÈRE PREMIÈRE ALUMINOSILICATE**
VERFAHREN ZUR HERSTELLUNG VON ZEMENT AUS EINEM ALUMINOSILIKAT-ROHSTOFF
METHOD FOR MANUFACTURING CEMENT FROM AN ALUMINOSILICATE RAW MATERIAL

(30) Priorité: 26.11.2020 FR 2012164
(43) Date de publication de la demande: 01.06.2022
(73) Titulaire: Commissariat à l'Energie Atomique et aux Energies Alternatives, 75015 Paris (FR)
(72) Inventeur: VANDENBOSSCHE, Martin, 38054 GRENOBLE Cedex 09 (FR)
(74) Mandataire: Hautier IP

(56) Documents cités:
- JP-A- 2020 186 143
- OGUNDIRAN M B ET AL: "Geopolymerisation of fly ashes with waste aluminium anodising etching solutions", JOURNAL OF ENVIRONMENTAL MANAGEMENT, ELSEVIER, AMSTERDAM, NL, vol. 181, 20 juin 2016 (2016-06-20), pages 118-123, XP029709734, ISSN: 0301-4797, DOI: 10.1016/J.JENVMAN.2016.06.017

## Description

### DOMAINE TECHNIQUE DE L'INVENTION

La présente invention concerne le domaine de la fabrication du ciment. Elle trouve pour application particulièrement avantageuse le domaine des ciments géopolymères.

### ÉTAT DE LA TECHNIQUE

Il existe plusieurs types de ciment utilisés aujourd'hui, notamment comme liant pour la fabrication du béton. Un ciment couramment utilisé est le ciment « Portland » composé de roches à base CaCO₃, de sable et d'argile. Le ciment Portland est issu d'une industrie lourde et complexe consistant à transformer le calcaire et l'argile dans des fours à 1500°C afin de créer le clinker, le composant de base du ciment. La chaleur nécessaire à cette transformation est généralement générée par des énergies fossiles. Il en résulte un dégagement important de dioxyde de carbone. En outre, la transformation du calcaire en oxyde de calcium induit un dégagement important de dioxyde de carbone, de formule chimique CO₂. Dans ces conditions, on estime que la production d'une tonne de ciment émet entre 750 kg et 950 kg de CO₂.

Il existe des ciments dits « géopolymères » ou « alcali-activé », fabriqués à partir d'une matière première aluminosilicate, et d'une solution alcaline riche en silice dissoute. Ces ciments diffèrent chimiquement du ciment Portland en ce que le durcissement du ciment Portland se fait par hydratation du silicate tricalcique du clinker, alors que la prise d'un ciment géopolymère s'effectue par polymérisation d'oligo-(sialate-siloxo) d'un métal alcalin, typiquement de potassium ou de sodium, en poly(sialate-siloxo) de ce métal alcalin.

Dans les ciments géopolymères, la transformation de la matière première aluminosilicate présente un coût énergétique et un rejet de CO₂ bien inférieurs à ceux de la fabrication du ciment Portland. D'un point de vue économique et environnemental, ces ciments sont donc prometteurs comme alternative ou en mélange au ciment Portland.

Il est notamment connu du document Ciments géopolymères, J. Davidovitz, Techniques de l'ingénieur, 10 oct. 2014, un procédé de fabrication de ciment comprenant le mélange dans de l'eau d'une matière première aluminosilicate et de silicates de potassium ou de sodium, de formule SiO₂ : M₂O (M représentant ici le sodium ou le potassium) et présentant un rapport molaire SiO₂/M₂O compris entre 1,45 et 1,95. Ce procédé reste toutefois améliorable, notamment pour diminuer son impact environnemental.

Le document JP 2020186143 A décrit un procédé de production d'un géopolymère comprenant le mélange d'une matière première contenant des cendres volantes, une poudre fine de laitier de haut fourneau et une solution de silice alcaline.

Un objet de la présente invention est donc de proposer une solution réduisant l'impact environnemental d'un procédé de fabrication de ciment à partir de matière première aluminosilicate.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre cet objectif, selon un premier aspect on prévoit un procédé de fabrication de ciment comprenant :
- la fourniture d'au moins un effluent de gravure d'un substrat à base de silicium comprenant un silicate d'un métal alcalin M dissout, de formule SiO₂ : M₂O, présentant un rapport molaire SiO₂/M₂O supérieur ou égal à 0,8, et de préférence supérieur ou égal à 1,40,
- la fourniture d'une matière première aluminosilicate, et
- le mélange de la matière première aluminosilicate avec l'effluent de gravure.

Ainsi, la solution de silicate de métal alcalin est récupérée auprès d'un procédé industriel du silicium existant, mettant en oeuvre une gravure de silicium et donc un effluent de gravure d'un substrat à base de silicium. Par exemple, ce procédé peut être un procédé de traitement du substrat dans le domaine du photovoltaïque, par exemple pour la fabrication de cellules photovoltaïques à base de silicium, et notamment les cellules photovoltaïques réalisées à partir d'un substrat en silicium monocristallin, ou de la microélectronique, par exemple pour la fabrication d'un composant de microélectronique. Il n'est donc pas nécessaire de fabriquer la solution de silicate de métal alcalin pour la réaction avec la matière première aluminosilicate, contrairement aux solutions existantes. Au lieu de consommer des ressources pour former cette solution, les déchets chimiques de l'industrie de gravure de substrat à base de silicium sont réinjectés dans ce procédé de fabrication de ciment pour leur valorisation. Le coût énergétique et les ressources nécessaires à la fabrication du ciment sont diminués, et par conséquent l'impact environnemental du procédé de fabrication de ciment est réduit.

Selon un autre aspect, le procédé de fabrication du ciment peut être mis en oeuvre dans un procédé de fabrication de béton. Le procédé de fabrication de béton peut comprendre la fabrication du ciment selon le premier aspect et le mélange du ciment et de granulats.

Un autre aspect de l'invention concerne une utilisation d'un effluent de gravure d'un substrat à base de silicium, formé d'une solution de silicate d'un métal alcalin, de formule SiO₂ : M₂O, et présentant un rapport molaire SiO₂/M₂O sensiblement supérieur ou égal à 0,8, et de préférence sensiblement supérieur ou égal à 1,40, en mélange avec une matière première aluminosilicate, pour la fabrication de ciment. Cet aspect présente les avantages décrits relativement au premier aspect.

Selon un exemple, le substrat à base de silicium dont l'effluent de gravure est fourni, est un substrat à base de silicium formant ou destiné à former une cellule photovoltaïque ou un composant microélectronique.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente des étapes du procédé de fabrication de ciment selon un exemple de réalisation, où des étapes optionnelles du procédé sont indiquées en pointillé et des chemins en parallèles indiquent des variantes du procédé.
La figure 2 représente un exemple de gravure d'un substrat à base de silicium, mettant en oeuvre un équipement de régulation d'un bain de gravure.
La figure 3 représente un exemple de mesure du rapport SiO₂/K₂O.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement.

Selon un exemple, le procédé comprend préalablement au mélange de la matière première aluminosilicate avec l'effluent de gravure, une vérification que le rapport molaire SiO₂/M₂O de l'au moins un effluent de gravure est supérieur ou égal à 0,8, et de préférence supérieur ou égal à 1,40.

Selon un exemple, la vérification est effectuée avant ou après la fourniture de l'au moins un effluent de gravure.

Selon un exemple, la vérification du rapport molaire SiO₂/M₂O comprend une mesure du rapport molaire SiO₂/M₂O dans l'au moins un effluent de gravure. La mesure du rapport molaire SiO₂/M₂O dans l'au moins un effluent de gravure peut être préalable à la fourniture de l'au moins un effluent de gravure.

Selon un exemple, la vérification comprend, suite à la mesure du rapport molaire SiO₂/M₂O, une modification de l'au moins un effluent de gravure de sorte que le rapport molaire SiO₂/M₂O atteint une valeur déterminée. Ainsi, l'effluent peut être modifié de sorte que le rapport molaire SiO₂/M₂O est supérieur à 0,8, de préférence à 1,40, s'il ne l'était pas auparavant. De façon alternative ou complémentaire, l'effluent peut être modifié de sorte que le rapport molaire SiO₂/M₂O présente une valeur déterminée supérieure à 0,8, de préférence à 1,40. Ainsi, la répétabilité du procédé peut être améliorée. En outre, l'effluent peut être adapté selon les besoins d'un cimentier, en vue par exemple d'obtenir des propriétés particulières du ciment.

Selon un exemple, la mesure du rapport molaire SiO₂/M₂O est réalisée dans un bain de gravure, lors d'un procédé de gravure du substrat à base de silicium, par un équipement de régulation du bain de gravure. La mesure de ce rapport peut ainsi être effectuée en directe lors du procédé de gravure, notamment de façon à identifier si le bain de gravure est apte à être fourni pour la fabrication du ciment.

Selon un exemple, le procédé de gravure de silicium comprenant une pluralité de gravures successives de substrats à base de silicium dans le bain de gravure, plusieurs mesures du rapport molaire SiO₂/M₂O sont réalisées au cours de la pluralité de gravures successives. De préférence, une mesure est réalisée à intervalles réguliers au cours de la pluralité de gravures successives, et de préférence entre chaque gravure. La mesure de ce rapport peut ainsi être effectuée en directe le long du déroulement du procédé de gravure, notamment de façon à identifier lorsque le bain de gravure est apte à être fourni pour la fabrication du ciment.

Selon un exemple, la modification de l'au moins un effluent de gravure comprend un ajustement des concentrations molaires relatives entre le silicate et le métal monovalent M.

Selon un exemple, la modification de l'au moins un effluent de gravure comprend la combinaison d'une pluralité d'effluents de gravures distincts.

Selon un exemple, le pH de l'au moins un effluent de gravure est supérieur à 9, et de préférence supérieur à 12. Ainsi, la quantité de silicate dissout dans l'effluent peut être maximisée.

Selon un exemple, le rapport molaire SiO₂/M₂O est, de préférence, inférieur ou égal à 3. Ainsi, l'effluent de gravure présente un risque chimique moindre à la manipulation et au transport.

Selon un exemple, la matière première aluminosilicate est choisie parmi des minéraux naturels comme la kaolinite ou des argiles, les laitiers de métallurgie, des cendres volantes, de la fumée de silice, des tufs volcaniques et des résidus miniers.

Selon un exemple, la matière première aluminosilicate est issue un rejet d'un procédé industriel. La matière première aluminosilicate et l'effluent de gravure étant des déchets de procédés industriels valorisés dans ce procédé de fabrication de ciment, l'impact sur l'environnement du procédé est encore réduit.

Selon un exemple, le substrat à base de silicium dont l'effluent de gravure est fourni, est un substrat en silicium cristallin et plus particulièrement en silicium monocristallin. Le substrat à base de silicium forme ou est destiné à former une cellule photovoltaïque par exemple une cellule photovoltaïque à base de silicium, par exemple de technologie de type homojonction ou hétérojonction ou un composant microélectronique.

Il est précisé que dans le cadre de la présente invention, un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

On entend par composé ou matériau « à base » d'un matériau A, un composé ou matériau comprenant ce matériau A, et éventuellement d'autres matériaux.

Un métal alcalin désigne de façon générale un élément métallique de la première colonne du tableau périodique des éléments chimiques, de préférence le potassium K ou le sodium Na.

Le rapport molaire i/j entre deux composés i et j désigne le rapport de la quantité de matière en moles du composé i sur la quantité de matière en moles du composé j.

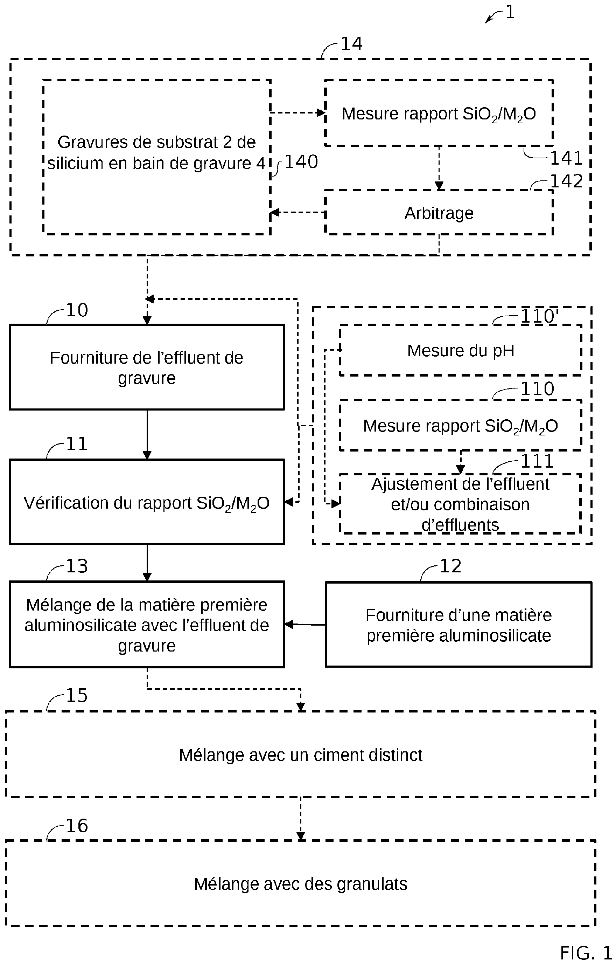

Le procédé 1 de fabrication de ciment est maintenant décrit selon un exemple de réalisation en référence à la figure 1.

Pour fabriquer du ciment, le procédé 1 comprend la fourniture 10 d'un effluent de gravure de substrat 2 à base ou fait de silicium, et en particulier de silicium monocristallin. Cet effluent peut provenir de toute industrie et/ou tout procédé comprenant cette gravure. Par exemple, l'effluent peut provenir d'un procédé de fabrication de cellules photovoltaïques à base de silicium, ou d'un procédé microélectronique de traitement d'un substrat à base de silicium. Lorsque l'effluent provient d'un procédé de fabrication de cellules photovoltaïques, il est en particulier issu :
- d'une étape de gravure du substrat en silicium destinée à retirer les zones endommagées des substrats après découpe (étape également connue sous l'acronyme anglo-saxon SDE pour « *Saw Dommage etching* »), et/ou
- d'une étape de texturation de la surface du substrat destinée à créer les pyramides.

Pour une usine de photovoltaïque de 1 GW/an de production de cellules photovoltaïques à base de silicium, on estime entre 3500 m³ et 5000 m³ le volume d'effluent de gravure généré, comprenant environ 200 tonnes de silicates alcalins dissouts. Ces effluents constituent des déchets chimiques, valorisables par leur réinjection dans le procédé 1 pour la fabrication de ciment. Ainsi le coût énergétique et les ressources pour fabriquer ce ciment sont diminués. Un ciment dont la fabrication présente un impact environnemental réduit peut être obtenu.

Lors d'une gravure d'un substrat à base de silicium, décrit en détail ultérieurement, le substrat 2 est exposé à des réactifs d'un bain de gravure 4, choisis pour réagir avec le silicium et ainsi mettre en forme la surface du substrat. Lors d'un procédé 14 de gravure, le silicium est typiquement oxydé en silice, de formule chimique SiO₂ puis gravé 140. Le bain de gravure 4 se charge en silice dissoute pour former l'effluent de gravure. Typiquement, le bain de gravure se charge en silice dissoute au fur et à mesure de la gravure 140 d'une pluralité de substrats 2, comme il sera vu dans la suite.

À l'issue de la gravure 140 de ces substrats 2, l'effluent comprend au moins un type, et par exemple plusieurs types de silicates de métal alcalin M dissous en solution. Selon un exemple, la solution est au moins en partie aqueuse, et de préférence la solution est une solution aqueuse d'au moins un silicate de métal alcalin M dissous. Le silicate de métal alcalin non dissous présente la formule chimique SiO₂ : M₂O. Le métal alcalin peut varier selon les réactifs utilisés dans le bain de gravure. Le métal alcalin M est de préférence le potassium (K) ou le sodium (Na). Le silicate de métal alcalin est donc de préférence un silicate de potassium, ou un silicate de sodium.

Dans le bain de gravure 4, et donc dans l'effluent subséquent, l'oxyde de métal alcalin M₂O peut être dissout en hydroxyde de métal alcalin, de formule MOH, selon la réaction chimique suivante : M₂O + H₂O → 2 M⁺ + 2 OH⁻. La silice peut être dissoute selon la réaction chimique suivante : SiO_{2 (s) +} 2 H₂O → Si(OH)_{4 (aq)}. En fonction du pH de l'effluent, Si(OH)₄ est converti dans l'un ou l'autre des espèces des couples acides/bases conjugués H₃SiO₄⁻ et H₂SiO₄²⁻. Généralement, on désigne par silice dissoute, ou encore « silice totale », l'ensemble des espèces comprenant l'élément silicium, issues de son oxydation en silice et sa dissolution dans le bain de gravure. La mesure des espèces dissoutes en solution permet de retrouver par équivalence les quantités relatives de SiO₂ et M₂O dissous et donc le rapport molaire SiO₂/M₂O en solution.

L'effluent de gravure peut être mélangé 13 à une matière première aluminosilicate fournie 12. Lors de ce mélange 13, le silicate de métal alcalin réagit avec la matière première aluminosilicate pour former le ciment géopolymère. Pour cela, l'effluent de gravure présente un rapport molaire SiO₂/M₂O supérieur ou égal à 0,8 et de préférence supérieur ou égal à 1,40. Ces valeurs minimums du rapport molaire permettent d'assurer l'obtention d'un ciment présentant des propriétés mécaniques satisfaisantes Plus préférentiellement encore, le rapport molaire SiO₂/M₂O peut être supérieur ou égal à 1,45. Lorsque le rapport molaire SiO₂/M₂O est supérieur ou égal à 1,45, .Le transport et la manipulation de l'effluent sont ainsi facilités. Afin de s'assurer de cette valeur, et donc de la qualité et/ou de la répétabilité du ciment obtenu, le procédé 1 peut comprendre une vérification 11 du rapport molaire SiO₂/M₂O. Cette vérification 11 peut notamment être faire pour vérifier que ce rapport molaire SiO₂/M₂O est supérieur ou égal aux valeurs précitées. Cette vérification 11 peut être effectuée préalablement au mélange 13, et/ou préalablement à la fourniture 10 de l'effluent de gravure.

La valeur du rapport molaire SiO₂/M₂O peut être adaptée 111 selon la nature de la matière première aluminosilicate. Le rapport molaire SiO₂/M₂O peut être de préférence inférieur à 4, de préférence à 3. Ainsi, l'effluent est considéré comme chimiquement peu dangereux pour un opérateur. Le transport de l'effluent et sa manipulation dans le procédé 1 sont ainsi facilités. En outre, l'effluent est alors plus stable, ce qui facilite la conservation de l'effluent.

Selon le pH de l'effluent de gravure, la quantité de silice pouvant être dissoute dans l'effluent peut être optimisée. Selon un exemple, le pH de l'effluent de gravure est supérieur ou égal à 9. Ainsi, la concentration molaire en silice peut atteindre au moins 10⁻³ mol/L. De préférence, le pH de l'effluent de gravure est supérieur ou égal à 12. Ainsi, la concentration molaire en silice peut atteindre au moins 0,5 mol/L. Par exemple, pour un effluent de gravure comprenant de l'hydroxyde de potassium dilué à une fraction massique de sensiblement de 3,5 % par rapport au poids total de la solution, le pH est sensiblement égal à 13,8 et le bain de gravure peut comprendre sensiblement plusieurs dizaines de mol/L de silice dissoute. Selon un exemple, la teneur en silice dissoute dans l'effluent est comprise entre 2 et 10 mol/L. Le procédé 1 peut comprendre une mesure 110' du pH de l'effluent de gravure, et un ajustement 111 du pH de l'effluent pour atteindre une valeur de pH déterminée. La mesure 110' et/ou l'ajustement 111 peuvent être réalisé peut être effectuée préalablement au mélange 13, et/ou préalablement à la fourniture 10 de l'effluent de gravure. Lors de l'ajustement 111, l'effluent de gravure peut être tamponné pour éviter des variations de pH pouvant entrainer une modification des équilibres de dissolution, et notamment une précipitation de la silice dissoute.

Au moins une matière première aluminosilicate peut être fournie 12 pour fabriquer le ciment. Plusieurs matières premières aluminosilicates peuvent être fournies 12 et mélangées 13 à l'effluent, par exemple pour moduler les propriétés du ciment obtenu. La matière première aluminosilicate comprend des silicates dans lesquels des atomes de silicium sont remplacés par des atomes d'aluminium. La matière première aluminosilicate peut être choisie parmi des minéraux naturels comme la kaolinite ou des argiles, ou encore de tufs volcaniques. La matière première aluminosilicate peut être issue d'un procédé industriel. Ainsi, la matière première aluminosilicate et l'effluent de gravure peuvent être tous deux issus de procédés industriels, dont les déchets sont donc valorisés par la fabrication de ciment selon le procédé 1. Concernant la matière première aluminosilicate, il n'y a dès lors pas de coût d'extraction supplémentaire. L'énergie et les ressources nécessaires à la fabrication de ciment, ainsi que les rejets en CO₂, sont encore limités. L'impact sur l'environnement du procédé 1 est encore réduit.

Par exemple, la matière première aluminosilicate peut être issue de scories de métallurgie, tels que les laitiers de métallurgie, et plus particulièrement les laitiers de hauts fourneaux. Selon un exemple, la matière première aluminosilicate est un laitier granulé et broyé de haut fourneau. La matière première aluminosilicate peut être des cendres volantes, généralement issues de la combustion de l'anthracite ou de charbon bitumineux, ou encore de lignite ou de charbon sub-bitumineux. La matière première aluminosilicate peut être de la fumée de silice, généralement produite de la production de silicium par réduction du quartz ou de la production d'alliages de ferrosilicium. La matière première aluminosilicate peut être issue de résidus miniers.

Lors du mélange 13 de la matière première aluminosilicate avec l'effluent de gravure, la matière première aluminosilicate et l'effluent de gravure peuvent être mélangés dans des proportions variables, notamment selon la nature de la matière première aluminosilicate et les propriétés recherchées du ciment. Selon un exemple, la matière première aluminosilicate peut représenter au moins 70 % du mélange 13. L'effluent de gravure, éventuellement complété par de l'eau, peut représenter le reste du mélange. Selon un exemple dans lequel la matière première aluminosilicate est un laitier granulé et broyé de haut fourneau, le mélange 13 peut comprendre de 80 à 90% de laitier pour 10 à 20% d'effluent de gravure.

Afin de vérifier 11 le rapport molaire SiO₂/M₂O de l'effluent de gravure, le procédé peut comprendre une mesure 110 de ce rapport. La mesure 110 peut comprendre une mesure de la quantité de silice dissoute dans l'effluent, et de la quantité équivalente de M₂O à partir de la quantité l'hydroxyde de métal alcalin M dissous dans l'effluent. Cette mesure peut être effectuée préalablement au mélange 13, et/ou préalablement à la fourniture 10 de l'effluent de gravure. Cette mesure peut être effectuée sur un prélèvement dans l'effluent de gravure, ou directement dans le bain de gravure comme il sera vu dans la suite. Ces mesures peuvent être effectuées par tout moyen connus de l'homme du métier. Par exemple, la quantité de silice dissoute peut être mesurée par un dosage de la silice totale. Des techniques optiques d'analyse de spectres peuvent en outre être envisagées.

Afin d'adapter la valeur du rapport molaire SiO₂/M₂O à une valeur particulière, la procédé 1 peut comprendre une modification 111 de l'effluent de gravure. Cette modification 111 peut comprendre un ajustement des concentrations relatives en SiO₂ et K₂O, par exemple par dilution, par concentration et/ou ajout d'une ou plusieurs espèces chimiques dans l'effluent. L'ajustement est de préférence fait en fonction de la mesure 110 effectuée. De façon alternative ou complémentaire, la modification 111 de l'effluent de gravure peut comprendre une combinaison d'une pluralité d'effluents, de préférence dont le rapport molaire SiO₂/M₂O a été mesuré 110 au préalable. La gestion des déchets de bain de gravure est ainsi optimisée selon la composition chimique des effluents, pour obtenir une valeur de rapport molaire SiO₂/M₂O particulière. Le coût et l'impact environnemental du procédé sont ainsi encore minimisés.

L'industriel de la gravure du silicium peut vérifier 11 le rapport molaire SiO₂/M₂O et peut modifier 111 l'effluent de gravure selon les besoins d'un cimentier mettant en oeuvre le procédé 1. Le ou les effluents de gravures peuvent être fournis au cimentier. Selon un exemple, le cimentier réalise, après réception, la vérification 11 du rapport molaire SiO₂/M₂O. Le cimentier peut alors modifier 111 l'effluent de gravure selon les besoins spécifiques à la fabrication d'un ciment. Ces effluents peuvent être fournis de l'industriel de la gravure de silicium à un tiers. Le tiers peut ensuite fournir 10 le ou les effluent(s) au cimentier. Avant la fourniture 10 de l'effluent au cimentier, le tiers peut effectuer la vérification 11, et peut modifier 111 l'effluent. L'un ou plusieurs des trois acteurs peut assurer la vérification 11 et peut modifier 111 l'effluent de gravure.

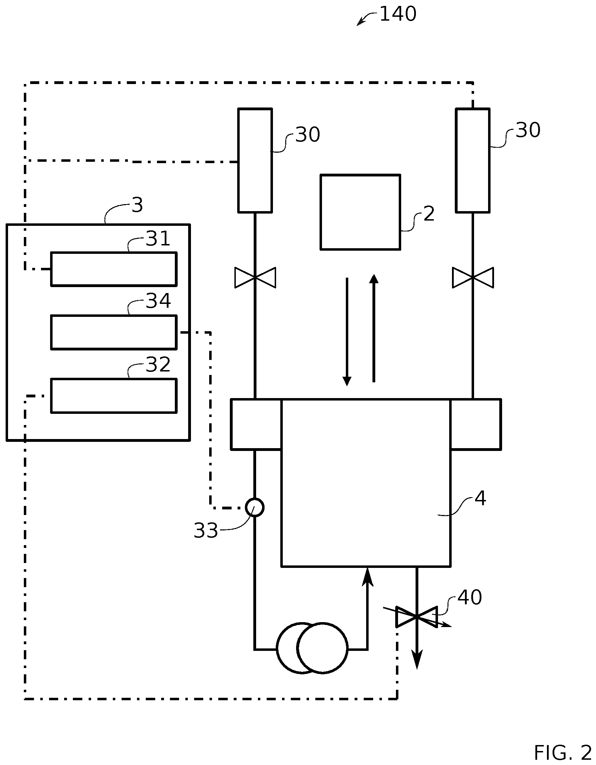

Selon un exemple, une mesure 141 du rapport molaire SiO₂/M₂O peut être effectuée par un industriel de la gravure de silicium. Typiquement, lors d'un procédé de gravure de silicium 14, le substrat 2 à base de silicium est gravé en bain de gravure 4. Ce procédé est maintenant décrit en référence à la figure 2. Lors du procédé de gravure 14, la surface endommagées, communément désignée zone écrouie, issue de la découpe des plaques de silicium, est retirée. Cette gravure 140 de la surface des plaques de silicium est communément abrégée SDR, de l'anglais *saw damaged removal,* que l'on peut traduire par retrait de la zone écrouie, ou SDE, de l'anglais saw *damaged etching,* que l'on peut traduire par gravure de la zone écrouie. Cette gravure 140 s'effectue généralement dans un bain d'une solution basique d'hydroxyde de potassium, de formule KOH, ou d'hydroxyde de sodium, de formule NaOH.

Après le retrait de la zone écrouie, le procédé 14 peut comprendre une deuxième étape de gravure 140 dans un bain d'une solution basique d'hydroxyde de potassium ou d'hydroxyde de sodium, généralement appelée texturation. La texturation est configurée pour former des pyramides en surface du substrat par le principe de gravure anisotropique, selon l'orientation des plans cristallins du silicium. À titre indicatif, l'étape de SDR représente environ les deux tiers de la masse de silicium retirée sur les substrats et la durée de vie d'un bain de gravure est souvent donnée pour le traitement d'environ 60 000 substrats. L'étape de texturation représente environ un tiers de la masse de silicium retirée sur les substrats et la durée de vie du bain de gravure est d'environ 20 000 à 30 000 substrats.

Lors d'un procédé 14 de gravure du silicium, chaque bain de gravure voit en effet passer une succession de lots de substrats 2. Avec chaque passage de lot, une stratégie de bain est associée afin de compléter le bain de gravure. Plus particulièrement, de l'hydroxyde de potassium ou de sodium et de l'eau déionisée et/ou déminéralisée sont ajoutés entre le passage de chaque lot. Un ajustement du volume du bain est effectué afin de compenser d'une part la part de liquide perdue par transport des substrats 2, le renouvellement suffisant des espèces chimiques responsables de la gravure et la compensation en volume du bain pour conserver un volume et une composition chimique suffisante pour la gravure 140 du substrat 2.

Typiquement, comme illustré par la figure 2, une partie du bain de gravure 4 peut être retiré par un drain 40. Des moyens d'ajouts 30 d'eau et/ou de réactifs peuvent ensuite être actionnés pour compléter le bain de gravure 4. Au fur et à mesure des gravures, le bain de gravure 4 s'enrichit en silice dissoute. Le rapport molaire SiO₂/M₂O peut donc évoluer jusqu'à ce que le bain de gravure 4, et l'effluent de gravure résultant, soit à apte à être utilisé dans le procédé de fabrication de ciment.

À titre d'exemple, plusieurs stratégies de bain et leur impact sur le rapport SiO₂/M₂O sont décrits. Ces stratégies correspondent à un équipement industriel dont le volume de bain est de 131 L afin de traiter 200 wafers de silicium par lot. Selon une première stratégie, on peut ajouter 0,5 L d'une solution de KOH à 45 % en fraction massique, par rapport au poids total de la solution de KOH, et 2 L d'eau entre chaque lot. Après le traitement du 40ème lot, un rapport molaire de SiO₂/K₂O supérieur à 1,4 peut être obtenu. L'effluent de gravure final, après passage de l'ensemble des lots, peut ainsi présenter un rapport molaire de SiO₂/K₂O sensiblement égal à 1,7.

Selon une deuxième stratégie, on peut ajouter 0,3 L d'une solution de KOH à 45 % en fraction massique, par rapport au poids total de la solution de KOH, et 2,5 L d'eau entre chaque lot. Après le traitement du 40ème lot, un rapport molaire de SiO₂/K₂O supérieur à 2 peut être obtenu. L'effluent de gravure final, après passage de l'ensemble des lots, peut ainsi présenter un rapport molaire de SiO₂/K₂O sensiblement égal à 2,7.

Selon une troisième stratégie, on peut ajouter 0,3 L d'une solution de KOH à 45 % en fraction massique, par rapport au poids total de la solution de KOH, et 1 L d'eau entre chaque lot. Après le traitement du 40ème lot, un rapport molaire de SiO₂/K₂O supérieur à 2 peut être obtenu. L'effluent de gravure final, après passage de l'ensemble des lots, peut ainsi présenter un rapport molaire de SiO₂/K₂O sensiblement égal à 2,5.

Selon une quatrième stratégie, on peut ajouter 1 L d'une solution de KOH à 45 % en fraction massique, par rapport au poids total de la solution de KOH, et 3 L d'eau entre chaque lot. Après le traitement du 25ème lot, un rapport molaire de SiO₂/K₂O supérieur à 0,7 peut être obtenu. L'effluent de gravure final, après passage de l'ensemble des lots, peut ainsi présenter un rapport molaire de SiO₂/K₂O sensiblement égal à 0,9.

Selon un exemple, le procédé de gravure de silicium 140, et notamment la stratégie de bain, peuvent être adaptés pour obtenir un rapport molaire SiO₂/M₂O particulier.

L'industriel de la gravure du silicium peut mettre en oeuvre la vérification 11 du rapport SiO₂/M₂O dans le bain de gravure et/ou dans l'effluent en résultant. Selon un exemple, la mesure 141 du rapport SiO₂/M₂O peut être réalisée par mesure ou prélèvement dans le bain de gravure 4. La mesure 141 peut être effectuée à intervalles réguliers lors du procédé de gravure 140, par exemple après qu'un nombre déterminé de lots de substrats aient été traités. Selon l'exemple illustré en figure 2, le procédé de gravure 140 peut mettre en oeuvre un équipement de régulation 3 du bain de gravure 4. Cet équipement comprend les moyens d'ajouts 30 de réactifs et/ou d'eau dans le bain de gravure 4, actionné par un ou plusieurs régulateur(s) 31. L'équipement de régulation 3 peut comprendre un capteur 33, pouvant être relié à une centrale de traitement 34 de la valeur mesurée. Le capteur 33 peut être disposé dans le bain de gravure 4. De préférence, et comme illustré en figure 2, le capteur 33 est disposé sur une boucle de recirculation du bain de gravure 4, permettant une mesure en ligne sur une fraction du bain de gravure 4.

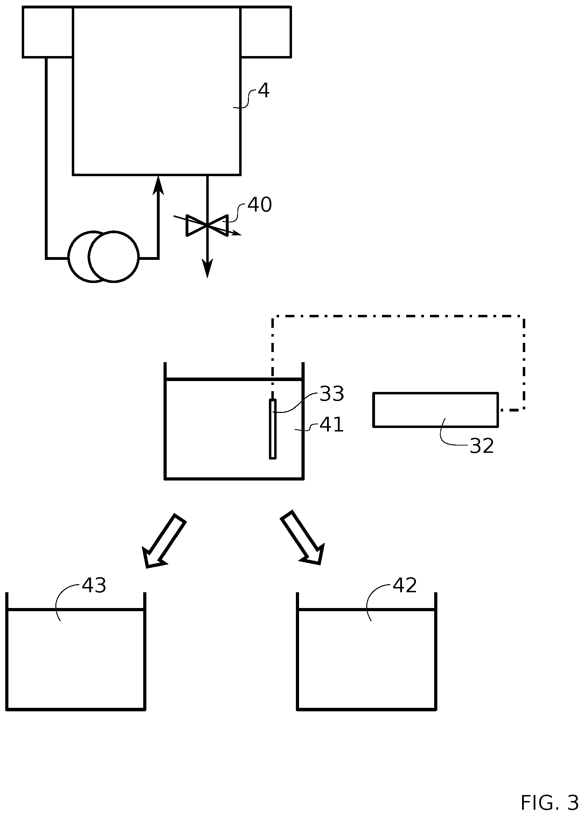

De façon alternative ou complémentaire, la mesure 141 du rapport SiO₂/M₂O peut être réalisée par mesure ou prélèvement dans un effluent issu d'un bain de gravure 4 au niveau d'une boucle de recirculation du bain de gravure 4, et/ou après drainage comme l'illustre la figure 3. La mesure 141 peut par exemple être effectuée grâce à un capteur 33, pouvant être relié à une centrale de traitement 34 de la valeur mesurée. Suite à la mesure 141, différents effluents de gravure peuvent être répartis selon leur rapport molaire SiO₂/M₂O. Les effluents de gravure peuvent être séparés dans différentes cuves 42, 43, éventuellement pour une modification 111 subséquente.

Le procédé 1 peut comprendre en outre, lors de ou suite au mélange 13 de la matière première aluminosilicate et de l'effluent de gravure, un mélange de ces éléments avec un ciment distinct, par exemple un ciment Portland. Le ciment ou le mélange de ciments obtenus à l'issu du procédé 1 peut être utilisé pour la fabrication d'un béton, par notamment un mélange avec des granulats.

Au vu de la description qui précède, il apparaît clairement que l'invention propose une solution particulièrement avantageuse de valorisation d'effluent de gravure et un procédé permettant de réduire l'impact environnemental d'un procédé de fabrication de ciment à partir de matière première aluminosilicate

L'invention n'est pas limitée aux modes de réalisations précédemment décrits et s'étend à tous les modes de réalisation couverts par les revendications.

## Revendications

1. Procédé (1) de fabrication de ciment comprenant :
- une fourniture (10) d'au moins un effluent de gravure d'un substrat (2) à base de silicium comprenant un silicate d'un métal alcalin M dissout, de formule SiO₂ : M₂O, présentant un rapport molaire SiO₂/M₂O supérieur ou égal à 0,8, et de préférence supérieur ou égal à 1,40,
- une fourniture (12) d'une matière première aluminosilicate, et
- un mélange (13) de la matière première aluminosilicate avec l'effluent de gravure.

2. Procédé selon la revendication précédente, comprenant préalablement au mélange (13) de la matière première aluminosilicate avec l'effluent de gravure, une vérification (11), que le rapport molaire SiO₂/M₂O de l'au moins un effluent de gravure est supérieur ou égal à 0,8, et de préférence supérieur ou égal à 1,40.

3. Procédé (1) selon la revendication précédente, dans lequel la vérification (11) du rapport molaire SiO₂/M₂O comprend une mesure (110) du rapport molaire SiO₂/M₂O dans l'au moins un effluent de gravure, et optionnellement une modification (111) de l'au moins un effluent de gravure de sorte que le rapport molaire SiO₂/M₂O atteint une valeur déterminée.

4. Procédé (1) selon l'une quelconque des revendications précédentes, dans lequel le procédé (1) comprend, préalablement à la fourniture (10) de l'au moins un effluent de gravure, la mesure (141, 110) du rapport molaire SiO₂/M₂O dans l'au moins un effluent de gravure, et optionnellement une modification (111) de l'au moins un effluent de gravure de sorte que le rapport molaire SiO₂/M₂O atteint une valeur déterminée.

5. Procédé (1) selon la revendication précédente, dans lequel la mesure (141) du rapport molaire SiO₂/M₂O est réalisée dans un bain de gravure (4), lors d'un procédé de gravure (14) du substrat (2) à base de silicium, par un équipement de régulation (3) du bain de gravure (4).

6. Procédé (1) selon la revendication précédente, dans lequel, le procédé de gravure (14) de silicium comprenant une pluralité de gravures (140) successives de substrats (2) à base de silicium dans le bain de gravure (4), plusieurs mesures (141) du rapport molaire SiO₂/M₂O étant réalisées au cours de la pluralité de gravures (140) successives.

7. Procédé (1) selon l'une quelconque des quatre revendications précédentes, dans lequel la modification (111) de l'au moins un effluent de gravure comprend un ajustement des concentrations molaires relatives entre le silicate et le métal monovalent M, et/ou la combinaison d'une pluralité d'effluents de gravures distincts.

8. Procédé (1) selon l'une quelconque des revendications précédentes, dans lequel le pH de l'au moins un effluent de gravure est supérieur à 9.

9. Procédé (1) selon l'une quelconque des revendications précédentes, dans lequel le rapport molaire SiO₂/M₂O est inférieur ou égal à 3.

10. Procédé (1) selon l'une quelconque des revendications précédentes, dans lequel la matière première aluminosilicate est choisie parmi des minéraux naturels comme la kaolinite ou des argiles, les laitiers de métallurgie, des cendres volantes, de la fumée de silice, des tufs volcaniques et des résidus miniers.

11. Procédé (1) selon l'une quelconque des revendications précédentes, dans lequel le substrat (2) à base de silicium dont l'effluent de gravure est fourni, est un substrat (2) à base de silicium formant ou destiné à former une cellule photovoltaïque.

12. Procédé (1) selon l'une quelconque des revendications 1 à 10, dans lequel le substrat (2) à base de silicium dont l'effluent de gravure est fourni, est un substrat (2) à base de silicium formant ou destiné à former un composant microélectronique.

13. Utilisation d'un effluent de gravure d'un substrat (2) à base de silicium, formé d'une solution de silicate d'un métal monovalent, de formule SiO₂: M₂O, et présentant un rapport molaire SiO₂/M₂O supérieur ou égal à 0,8, et de préférence supérieur ou égal à 1,40, en mélange avec une matière première aluminosilicate, pour la fabrication de ciment.

14. Utilisation selon la revendication précédente, dans laquelle le substrat (2) à base de silicium dont l'effluent de gravure est fourni, est un substrat (2) à base de silicium formant ou destiné à former une cellule photovoltaïque ou un composant microélectronique.

## Patentansprüche

1. Verfahren (1) zur Herstellung von Zement, umfassend:
- Bereitstellen (10) mindestens eines Ätzeffluents für ein Substrat (2) auf Siliciumbasis, umfassend ein gelöstes Silicat eines Alkalimetalls M der Formel SiO₂:M₂O, die ein SiO₂/M₂O-Molverhältnis größer als oder gleich 0,8 und vorzugsweise größer als oder gleich 1,40 aufweist,
- Bereitstellen (12) eines Aluminosilicat-Rohstoffs und
- Mischen (13) des Aluminosilicat-Rohstoffs mit dem Ätzeffluent.

2. Verfahren nach dem vorhergehenden Anspruch, umfassend vor dem Mischen (13) des Aluminosilicat-Rohstoffs mit dem Ätzeffluent ein Verifizieren (11), dass das SiO₂/M₂O-Molverhältnis des mindestens einen Ätzeffluents größer als oder gleich 0,8 und vorzugsweise größer als oder gleich 1,40 ist.

3. Verfahren (1) nach dem vorhergehenden Anspruch, wobei das Verifizieren (11) des SiO₂/M₂O-Molverhältnisses ein Messen (110) des SiO₂/M₂O-Molverhältnisses in dem mindestens einen Ätzeffluent und optional ein Modifizieren (111) des mindestens einen Ätzeffluents, so dass das SiO₂/M₂O-Molverhältnis einen bestimmten Wert erreicht, umfasst.

4. Verfahren (1) nach einem der vorhergehenden Ansprüche, wobei das Verfahren (1) vor dem Bereitstellen (10) des mindestens einen Ätzeffluents das Messen (141, 110) des SiO₂/M₂O-Molverhältnisses in dem mindestens einen Ätzeffluent und optional ein Modifizieren (111) des mindestens einen Ätzeffluents, so dass das SiO₂/M₂O-Molverhältnis einen bestimmten Wert erreicht, umfasst.

5. Verfahren (1) nach dem vorhergehenden Anspruch, wobei das Messen (141) des SiO₂/M₂O-Molverhältnisses in einem Ätzbad (4) während eines Ätzverfahrens (14) an dem Substrat (2) auf Siliciumbasis durch eine Regulierungseinrichtung (3) des Ätzbads (4) durchgeführt wird.

6. Verfahren (1) nach dem vorhergehenden Anspruch, wobei das Ätzverfahren (14) für Silicium eine Vielzahl von aufeinanderfolgenden Ätzungen (140) von Substraten (2) auf Siliciumbasis in dem Ätzbad (4) umfasst, wobei mehrere Messungen (141) des SiO₂/M₂O-Molverhältnisses im Laufe der mehreren aufeinanderfolgenden Ätzungen (140) durchgeführt werden.

7. Verfahren (1) nach einem von vier vorhergehenden Ansprüchen, wobei das Modifizieren (111) des mindestens einen Ätzeffluents ein Justieren von relativen molaren Konzentrationen zwischen dem Silicat und dem einwertigen Metall M und/oder der Kombination einer Vielzahl von verschiedenen Ätzeffluenten umfasst.

8. Verfahren (1) nach einem der vorhergehenden Ansprüche, wobei der pH-Wert des mindestens einen Ätzeffluents größer als 9 ist.

9. Verfahren (1) nach einem der vorhergehenden Ansprüche, wobei das SiO₂/M₂O-Molverhältnis kleiner als oder gleich 3 ist.

10. Verfahren (1) nach einem der vorhergehenden Ansprüche, wobei der Aluminosilicat-Rohstoff aus natürlichen Mineralien wie Kaolinit oder Tone, Schlacken der Metallindustrie, Flugaschen, Mikrosilica, Tuffe und Tailings ausgewählt ist.

11. Verfahren (1) nach einem der vorhergehenden Ansprüche, wobei das Substrat (2) auf Siliciumbasis, dessen Ätzeffluent bereitgestellt wird, ein Substrat (2) auf Siliciumbasis ist, das eine Photovoltaikzelle bildet oder dazu vorgesehen ist, eine Photovoltaikzelle zu bilden.

12. Verfahren (1) nach einem der Ansprüche 1 bis 10, wobei das Substrat (2) auf Siliciumbasis, dessen Ätzeffluent bereitgestellt wird, ein Substrat (2) auf Siliciumbasis ist, das ein mikroelektronisches Bauteil bildet oder dazu vorgesehen ist, ein mikroelektronisches Bauteil zu bilden.

13. Verwendung eines Ätzeffluents für ein Substrat (2) auf Siliciumbasis, das von einer Lösung eines Silicats eines einwertigen Metalls der Formel SiO₂:M₂O gebildet wird und ein SiO₂/M₂O-Molverhältnis größer als oder gleich 0,8 und vorzugsweise größer als oder gleich 1,40 aufweist, im Gemisch mit einem Aluminosilicat-Rohstoff zur Herstellung von Zement.

14. Verwendung nach dem vorhergehenden Anspruch, wobei das Substrat (2) auf Siliciumbasis, dessen Ätzeffluent bereitgestellt wird, ein Substrat (2) auf Siliciumbasis ist, das eine Photovoltaikzelle oder ein mikroelektronisches Bauteil bildet oder dazu vorgesehen ist, eine Photovoltaikzelle oder ein mikroelektronisches Bauteil zu bilden.

## Claims

1. A method (1) for manufacturing cement comprising:
- supplying (10) at least one effluent from etching a silicon-based substrate (2) comprising a dissolved silicate of an alkali metal M, of formula SiO₂:M₂O, having a SiO₂/M₂O molar ratio greater than or equal to 0.8, and preferably greater than or equal to 1.40,
- supplying (12) an aluminosilicate raw material, and
- mixing (13) the aluminosilicate raw material with the etching effluent.

2. The method according to the preceding claim, comprising, prior to the mixing (13) of the aluminosilicate raw material with the etching effluent, a verification (11) that the SiO₂/M₂O molar ratio of the at least one etching effluent is greater than or equal to 0.8, and preferably greater than or equal to 1.40.

3. The method (1) according to the preceding claim, wherein the verification (11) of the SiO₂/M₂O molar ratio comprises a measurement (110) of the SiO₂/M₂O molar ratio in the at least one etching effluent, and optionally a modification (111) of the at least one etching effluent so that the SiO₂/M₂O molar ratio reaches a determined value.

4. The method (1) according to any one of the preceding claims, wherein the method (1) comprises, prior to the supply (10) of at least one etching effluent, the measurement (141, 110) of the SiO₂/M₂O molar ratio in the at least one etching effluent, and optionally a modification (111) of the at least one etching effluent so that the SiO₂/M₂O molar ratio reaches a determined value.

5. The method (1) according to the preceding claim, wherein the measurement (141) of the SiO₂/M₂O molar ratio is carried out in an etching bath (4), during a method (14) for etching the silicon-based substrate (2), by regulation equipment (3) of the etching bath (4).

6. The method (1) according to the preceding claim, wherein, the silicon etching method (14) comprising a plurality of successive etchings (140) of silicon-based substrates (2) in the etching bath (4), several measurements (141) of the SiO₂/M₂O molar ratio being carried out during the plurality of successive etchings (140).

7. The method (1) according to any one of the four preceding claims, wherein the modification (111) of the at least one etching effluent comprises an adjustment of the relative molar concentrations between the silicate and the monovalent metal M, and/or the combination of a plurality of distinct etching effluents.

8. The method (1) according to any one of the preceding claims, wherein the pH of the at least one etching effluent is greater than 9.

9. The method (1) according to any one of the preceding claims, wherein the SiO₂/M₂O molar ratio is less than or equal to 3.

10. The method (1) according to any one of the preceding claims, wherein the aluminosilicate raw material is selected from natural minerals such as kaolinite or clays, metallurgical slags, fly ash, silica fume, volcanic tuffs and mining residues.

11. The method (1) according to any one of the preceding claims, wherein the silicon-based substrate (2) from which the etching effluent is supplied, is a silicon-based substrate (2) forming or intended to form a photovoltaic cell.

12. The method (1) according to any one of claims 1 to 10, wherein the silicon-based substrate (2) from which the etching effluent is supplied, is a silicon-based substrate (2) forming or intended to form a microelectronic component.

13. A use of an effluent for etching a silicon-based substrate (2), formed from a silicate solution of a monovalent metal, of formula SiO₂:M₂O, and having a SiO₂/M₂O molar ratio greater than or equal to 0.8, and preferably greater than or equal to 1.40, mixed with an aluminosilicate raw material, for the manufacture of cement.

14. The use according to the preceding claim, wherein the silicon-based substrate (2) from which the etching effluent is supplied, is a silicon-based substrate (2) forming or intended to form a photovoltaic cell or a microelectronic component.
